# FASCICULE DE BREVET EUROPEEN

(11) **EP 0 677 392 B1**
(45) Date de publication et mention de la délivrance du brevet: **02.09.1998**
(21) Numéro de dépôt: 95400839.7
(22) Date de dépôt: 12.04.1995
(51) Int. Cl.: B41J 3/60, G06K 1/12

(54) **Machine d'impression biface simultanée**
Druckmaschine für gleichzeitig ausgeführten zweiseitigen Druck
Simultaneous two-sided printing machine

(30) Priorité: 15.04.1994 FR 9404829
(43) Date de publication de la demande: 18.10.1995
(73) Titulaire: GEMPLUS CARD INTERNATIONAL, F-13420 Gémenos (FR)
(72) Inventeur: Morgavi, Paul, F-75116 Paris (FR)
(74) Mandataire: Ballot, Paul Denis Jacques

(56) Documents cités:
- EP-A- 0 147 730
- WO-A-88/03873
- WO-A-88/04132
- DE-A- 4 034 327
- FR-A- 2 631 888
- PATENT ABSTRACTS OF JAPAN vol. 11, no. 34 (M-558) (2481) 31 Janvier 1987 & JP-A-61 202 863 (CANON INC) 8 Septembre 1986

## Description

La présente invention concerne une machine d'impression biface simultanée en couleurs pour imprimer des cartes, notamment en matière plastique.

Il est connu la technologie du transfert thermique dans laquelle le colorant est déposé et fixé sur le support à imprimer grâce aux résistances qui composent une tête d'impression thermique chauffant un ruban enduit de colorants par le biais d'un courant électrique modulé.

Il est également connu la technologie du ruban plastique sur lequel sont déposées séquentiellement des couleurs primaires, jaune, magenta, cyan, permettant d'obtenir par combinaisons des différentes longueurs d'onde dites soustractives une palette de plusieurs millions de couleurs.

Dans la demande de brevet français n° 94 02116 intitulée : "MACHINE IMPRIMANTE EN COULEURS" déposée le 24 février 1994 par la demanderesse, il a été décrit une machine imprimante en couleurs dans laquelle la carte à imprimer passe successivement plusieurs fois sous la même tête d'impression thermique sous laquelle défile le ruban à couleurs séquentielles. Dans une telle machine, après l'impression de la première couleur, la tête d'impression thermique est remontée pour permettre le retour de la carte à son point de départ. La carte passe ensuite à nouveau sous la tête d'impression thermique en position basse pour l'impression de la deuxième couleur.

Le cycle recommence pour l'impression de la troisième et dernière couleur.

Dans la demande de brevet français n° 94 04827 déposée le 15 avril 1994 par la demanderesse et intitulée "SYSTEME D'IMPRESSION AUTOMATIQUE DE CARTES EN NOIR ET BLANC ET EN COULEURS RECTO VERSO PAR RETOURNEMENT DE LA CARTE", il a été décrit une machine imprimante en couleurs dans laquelle la carte à imprimer passe côté recto successivement plusieurs fois sous la même tête d'impression thermique sous laquelle défile le ruban à couleurs séquentielles. Dans une telle machine, après l'impression de la première couleur, la tête d'impression thermique est remontée pour permettre le retour de la carte à son point de départ. La carte passe ensuite à nouveau sous la tête d'impression thermique en position basse pour l'impression de la deuxième couleur. Le cycle recommence pour l'impression de la troisième et dernière couleur.

La carte est ensuite retournée dans un dispositif de retournement pour être présentée côté verso sous une tête d'impression thermique, pouvant être la même que pour le côté recto, où elle passe successivement à trois reprises comme énoncé ci-dessus pour l'impression des trois colorants primaires.

Mais cette solution n'est pas entièrement satisfaisante lorsque l'on doit imprimer de grandes quantités de cartes. En effet, pendant qu'une carte effectue son cycle d'impression - entrée, rotation ± 180°, sortie - il s'écoule un temps non négligeable pendant lequel les capacités d'impression de la tête thermique sont inemployées.

Pour pallier cet inconvénient, l'invention a pour but de réaliser une machine imprimante permettant de réaliser simultanément l'impression des deux faces de la carte et donc d'offrir une vitesse d'exécution plus grande.

Le document FR-A-2 631 888 décrit un système d'impression biface sur un ruban de papier défilant à l'aide de deux blocs d'impression, l'un pour le recto et l'autre pour le verso, qui sont placés soit en vis-à-vis sur le même axe, soit décalés l'un par rapport à l'autre.

Le document WO-A-88/04132 décrit un dispositif de guidage et de convoyage d'une carte à imprimer devant une tête d'impression utilisant un ruban à encre transférable qui est entraîné à vitesse linéaire constante par un cabestan.

En conséquence, l'invention a pour objet une machine d'impression biface simultanée pour cartes, notamment en matière plastique, qui comprend :
- un dispositif de guidage et de convoyage d'une carte comprenant des guides, des rouleaux, entraînés par des moteurs qui sont pilotés par des moyens de détection, et
- deux machines imprimantes identiques comprenant chacune une tête d'impression thermique, un ruban supportant des colorants et substances à déposer sur ladite carte à imprimer, qui sont dotées d'un dispositif de pilotage du défilement dudit ruban, chaque machine imprimante étant placée de part et d'autre du dispositif de quidage et de convoyage pour que leurs têtes d'impression thermique puissent se déplacer suivant un même axe vertical perpendiculaire à la carte à imprimer,
   caractérisée en ce que la machine d'impression biface comprend, en outre,
- un dispositif de déplacement et de positionnement simultanés desdites têtes d'impression thermique, et
- un circuit de commande électronique du dispositif de guidage et de convoyage des machines imprimantes et du dispositif de déplacement et positionnement simultanés des têtes d'impression thermique de manière à les rapprocher de la carte pour amener les rubans en contact avec la carte à imprimer lors du passage de cette dernière dans le dispositif de guidage et de convoyage à l'endroit des têtes d'impression thermique et à les écarter de la carte pour déplacer les rubans et la carte .

Le dispositif de déplacement et de positionnement des têtes d'impression thermique comprend une came entraînée par un moyen moteur déplaçant symétriquement et en sens inverse deux épaulements qui sont solidaires respectivement de chaque tête d'impression thermique et se déplacent suivant le même axe vertical guidés par des galets et dotés d'un ressort réglable permettant à chaque tête, après détection d'un jeu déterminé entre la came et chaque épaulement par un dispositif de détection optique d'exercer une pression égale et de direction opposée sur chaque face de la carte à imprimer.

D'autres caractéristiques et avantages de l'invention apparaîtront à la lecture de la description détaillée qui suit et qui est faite en référence aux dessins annexés dans lesquels :
- la figure 1 est une vue schématique de la machine selon l'invention,
- la figure 2 est un schéma de principe du système de positionnement des têtes d'impression thermique,
- la figure 3 est une vue en coupe montrant la carte à imprimer dans le dispositif de guide et de convoyage,
- la figure 4 est une vue montrant une paire de rouleaux d'entraînement de la carte à imprimer, et
- la figure 5 est un schéma fonctionnel d'un système de commande électronique de la machine selon l'invention.

La machine, selon l'invention, présente un axe de symétrie dans un plan horizontal déterminant des moyens pour imprimer au recto d'une carte 33 et des moyens pour imprimer simultanément au verso de la carte. Elle comprend deux têtes d'impression thermique qui travaillent sur un même axe vertical 18, l'une tête en bas 10, l'autre tête en haut 11. Ces têtes peuvent se déplacer verticalement de bas en haut et de haut en bas le long d'un rail de guidage 31, 31A maintenues par des galets 27, 27A.

A la tête d'impression thermique 10 est associé un ruban 12 qui supporte des colorants se présentant dans un ordre séquentiel. Il se déroule à partir d'une bobine de stockage 36, passe sous la tête d'impression thermique 10 et s'enroule sur une bobine réceptrice 37 entraînée par un moteur pas à pas 30 qui est commandé par un système de pilotage 23 de manière à synchroniser la vitesse angulaire d'enroulement variable à une vitesse de défilement constante.

A la tête d'impression thermique 11 est associé un ruban 13 qui supporte des colorants se présentant dans un ordre séquentiel. Il se déroule à partir d'une bobine de stockage 36A, passe sur la tête d'impression thermique 11 et s'enroule sur une bobine réceptrice 37A qui est entraînée par un moteur pas à pas 30A qui est commandé par un système de pilotage 23A de manière à synchroniser la vitesse angulaire d'enroulement variable à une vitesse de défilement constante.

La carte à imprimer 33 est guidée et convoyée entre les têtes thermiques 10 et 11 et les rubans associés 12 et 13 par un dispositif de guidage et de convoyage placé à l'intérieur de deux demi-carters fixes 34, 34A.

Ce dispositif comprend des coulisseaux 32 en forme de U à plat permettant à la carte 33 de coulisser horizontalement, grâce à au moins deux paires de rouleaux 19, 19A, 20, 20A symétriques tournant en sens inverse et entraînés par un moteur 15, 15A. Les paires de rouleaux d'entraînement de la carte sont distantes d'une longueur inférieure à la longueur d'une carte en sorte qu'une carte pénétrant dans le dispositif de guidage et de convoyage est toujours convoyée - poussée ou tirée - par au moins une paire de rouleaux 19, 19A, 20, 20A. Les deux demi-carters 34, 39 sont dotés de lèvres en biseau 35, 35A, en vis-à-vis, distantes d'une longueur suffisante pour permettre le passage des deux têtes d'impression thermique 10, 11 venant au contact des deux faces de la carte à imprimer 33, mais permettant de minimiser le parcours hors carters d'une carte.

La carte 33 subit un échauffement en surface du fait de la technologie d'impression par transfert thermique. Cet échauffement peut libérer des contraintes et provoquer une légère courbure de la carte du fait des différences de température des deux faces car une face imprimée en couleurs foncées subit une plus forte élévation de température que l'autre face imprimée en couleurs claires. Les lèvres 35, 35A, permettent de recueillir la carte et de la diriger dans les coulisseaux rectilignes 32 avant que la déformation n'entraîne de désordres dimensionnels. Les lèvres sont positionnées pour que la carte 33, poussée par les rouleaux, ne soit hors carters qu'à la verticale des têtes d'impression thermique et puisse être facilement reprise dans un système guidé dès que l'encombrement des têtes le permet.

Le dispositif de guidage et de convoyage comprend quatre dispositifs de détection 17, 17A et 17', 17'A de la carte à imprimer 33 placés pour la paire 17, 17A à l'entrée et l'autre paire 17', 17'A à la sortie. Une troisième paire de dispositifs de détection 16, 16A est placée après les têtes d'impression thermique et à proximité de celles-ci. Ces dispositifs de détection sont de préférence du type à cellules photoélectriques.

Les têtes d'impression thermique 10 et 11 sont mises en place par rapport à la carte à imprimer 33 par un système de positionnement simultané qui comprend une came 25 entraînée par un moteur 22 déplaçant symétriquement et en sens inverse deux épaulements 26, 26A solidaires de chaque tête d'impression thermique 10, 11. Le déplacement s'opère sur le même axe vertical 18, le long d'un rail 31, 31A, guidé par des galets 27, 27A. La came 25 amène les têtes d'impression thermique 10, 11 au contact des deux faces de la carte 33. Elle continue sa rotation jusqu'à ce qu'un jeu déterminé 40, 40A soit détecté entre la came et les épaulements par un dispositif de détection 29, 29A commandant l'arrêt du moteur 22. Lorsque la came 25 n'entraîne plus les épaulements 26, 26A les têtes étant au contact des deux faces de la carte, des ressorts 28, 28A réglables par une molette 38, 38A permettent à chaque tête d'impression thermique d'exercer une pression égale et de direction opposée sur les deux faces de la carte à imprimer. La carte n'est donc pas déformée par un déséquilibre de pression sur ses faces si un déséquilibre se produisait, notamment du fait de la rupture ou du déréglage d'un ressort taré, le système de positionnement est en mesure de le détecter.

En effet, le fonctionnement normal se traduit par l'apparition simultanée des deux jeux entre la came et chacun des épaulements ainsi que pour une progression contraire des deux jeux jusqu'à l'arrêt du moteur de la came.

Le déréglage d'un ressort va provoquer un décalage dans l'apparition d'un jeu par rapport à l'autre ainsi qu'une progression de valeur différente. Autant d'éléments détectés par le dispositif de détection 29 ou 29A selon le siège du désordre.

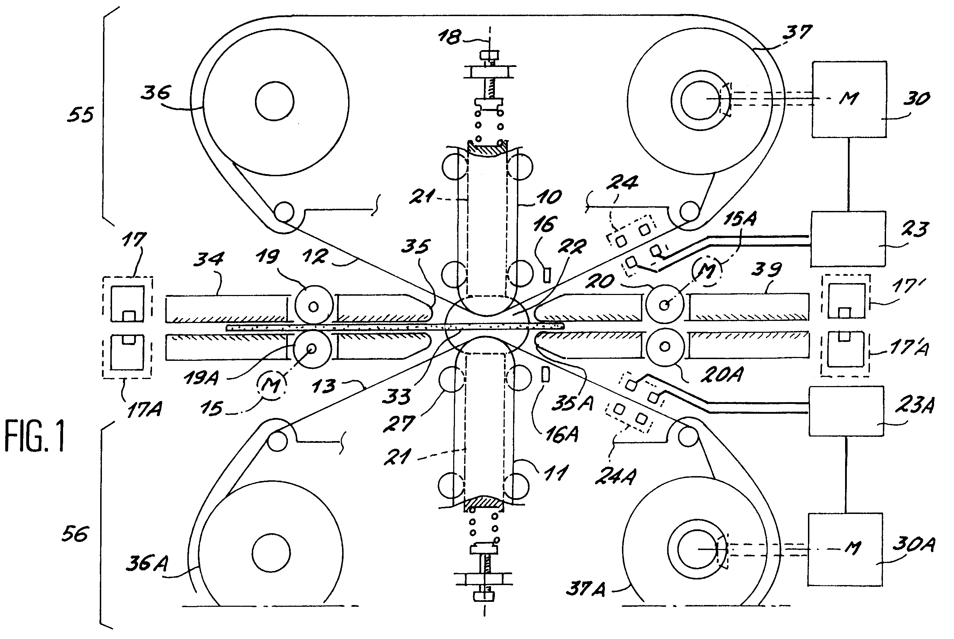

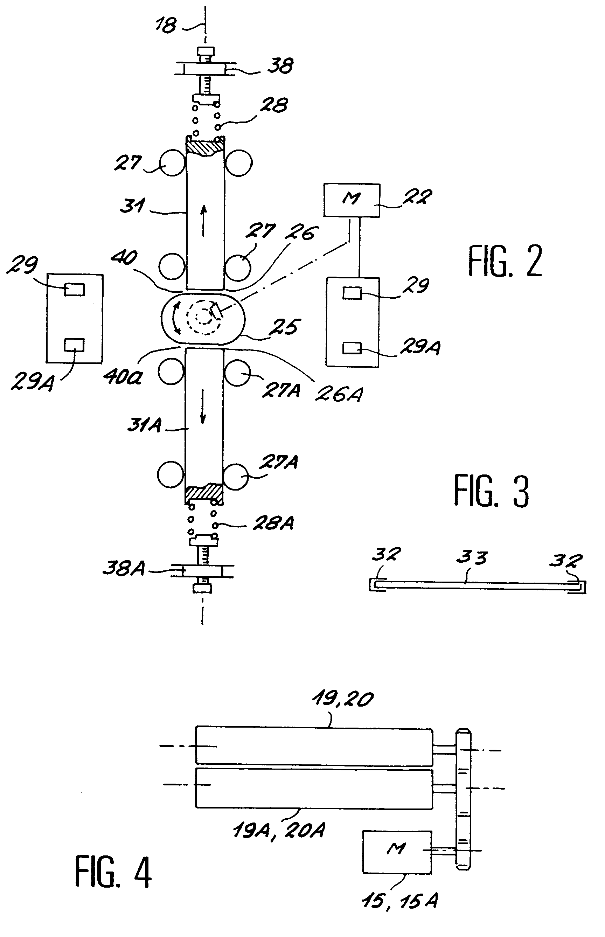

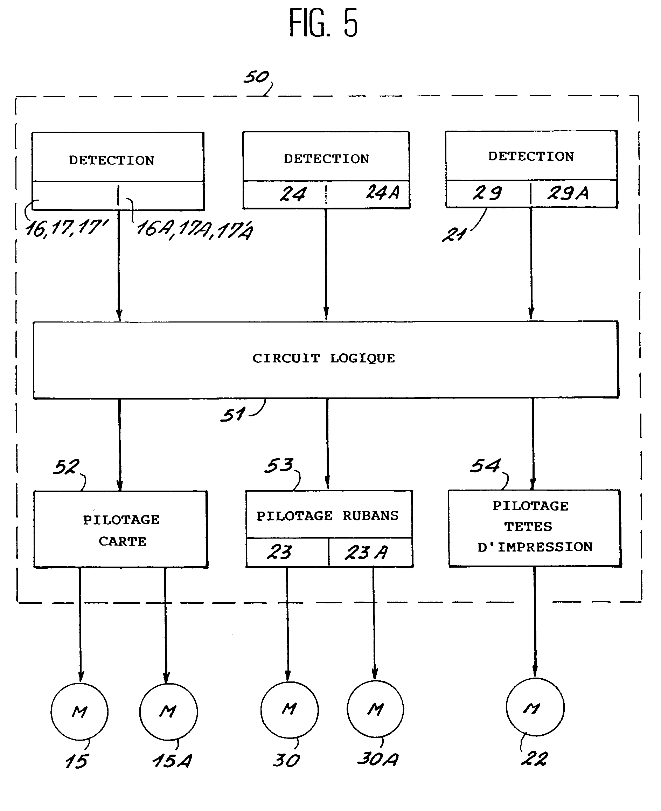

L'ensemble des éléments de la machine tels que décrits en relation avec les figures 1 à 4 sont commandés par un système de commande électronique 50 dont le schéma fonctionnel est donné par la figure 5.
- les dispositifs de détection 16, 16A, 17, 17A, 17', 17'A du dispositif de guidage et de convoyage de la carte 33;
- les dispositifs de détection 24 et 24A des index et séparateurs sur les rubans 12, 13;
- les dispositifs de détection 29, 29A des positions des têtes d'impression thermique;
- un circuit logique 51, du type microprocesseur, qui reçoit les signaux de détection fournis par les dispositifs de détection 16, 16A, 17, 17A, 17', 17'A, 24, 24A, 29, 29A et qui élabore des signaux appliqués à des dispositifs de pilotage des moteurs 15, 15A, 30, 30A et 22;
- un dispositif de pilotage 52 des moteurs 15 et 15A pour faire défiler la carte 33 sous les têtes d'impression thermique 10 et 11;
- un dispositif de pilotage 54 du moteur 22 d'entraînement des têtes d'impression thermique de manière à amener chaque tête au contact du ruban support associé et de la carte à imprimer et de dégager la tête lors de la translation sans impression de la carte;
- un dispositif de pilotage 53 des moteurs 30 et 30A d'entraînement des bobines réceptrices 37 et 37A de manière, d'une part, à positionner successivement chaque colorant ou substance en fonction des translations de la carte à imprimer sous les têtes d'impression thermique et, d'autre part, à maintenir une vitesse de défilement constante des rubans sous les têtes d'impression thermique en dépit de l'accroissement du diamètre du tambour de la bobine réceptrice à chaque tour.

Il est à remarquer que le dispositif de pilotage 53 des moteurs 30 et 30A comprend en fait les deux dispositifs 23 et 23A de la figure 1 qui fonctionnent de manière indépendante sauf si certaines anomalies sont détectées, auquel cas le cycle d'impression est arrêté.

Ainsi chaque dispositif de pilotage 23 et 23A repère et se cale sur un index de début de séquence de couleurs primaires de son ruban et autorise séparément le déroulement du cycle d'impression par transfert thermique. Mais il faut obligatoirement que les deux autorisations soient délivrées pour que le cycle commence.

Si un ruban, par exemple, est consommé avant l'autre, le cycle d'impression est interrompu et ne pourra reprendre qu'après rechargement d'un ruban neuf et recalage des index. De même, si un incident est détecté dans la lecture d'un index d'une bande, le cycle est arrêté.

Un tel dispositif de pilotage a été décrit dans la demande de brevet n° 94 02118 déposée par la demanderesse le 24 février 1994 et intitulée : "SYSTEME ET PROCEDE DE PILOTAGE DE L'ENROULEMENT D'UN RUBAN SUR UNE BOBINE RECEPTRICE".

La description qui vient d'être faite de la machine d'impression biface simultanée montre qu'elle comprend en fait deux machines imprimantes identiques 55 et 56 qui sont montées face à face de part et d'autre d'un dispositif de guidage et de convoyage horizontal et dont les têtes d'impression thermique sont déplacées en synchronisme par un mécanisme approprié. Par ailleurs, les dispositifs de pilotage de l'enroulement de chaque ruban sont synchronisés par l'intermédiaire du circuit logique 51 (figure 5).

Le fonctionnement de la machine est le suivant. Lorsque la carte 33 est présentée horizontalement dans le sens longitudinal à l'entrée du dispositif de guidage et de convoyage, elle est prise en charge par une paire de rouleaux d'entraînement 19, 19A et coulisse à l'intérieur des demi-carters gauche 34 en étant guidée par les coulisseaux 32, en direction des têtes d'impression thermique 10, 11. La carte commence à sortir par les lèvres biseautées 35 des demi-carters gauche 34 et se présente à la verticale des têtes d'impression thermique.

Les têtes sont alors animées d'un mouvement vertical, de haut en bas pour la tête supérieure 10, de bas en haut pour la tête inférieure 11, au moyen du système de positionnement à came 25 et au moteur 22. Dans le même temps, les rubans 12, 13 sont venus se positionner contre la carte et les têtes d'impression thermique de telle manière que le premier colorant de la séquence se présente sous les deux faces à imprimer. Les ressorts d'appui 28, 28A exercent une pression égale et de sens opposé sur chaque face de la carte.

La carte, poussée par les rouleaux d'entraînement du demi-carter gauche 34, est entraînée sous les têtes d'impression thermique à vitesse constante. Chaque ruban, entraîné par son moteur 30, 30A distinct, défile à vitesse constante sous la tête d'impression thermique 10, 11 avec laquelle il est en contact et s'enroule sur la bobine réceptrice 37, 37A entraînée par un moteur pas à pas 30, 30A. Le nombre de pas est synchronisé à la vitesse de défilement du ruban sous la tête d'impression thermique pour tenir compte de l'accroissement du diamètre de la bobine réceptrice à chaque tour.

La carte pénètre dans le demi-carter droit 39 par sa partie biseautée 35A où elle est prise en charge par les rouleaux 20, 20A d'entraînement qui la tire, guidée par les coulisseaux 32, à vitesse constante sous les têtes d'impression thermique jusqu'à ce que l'impression par transfert thermique du premier colorant soit entièrement réalisée par toutes les surfaces de la carte recto verso.

A l'issue de ce premier transfert de colorants les têtes d'impression sont animées d'un mouvement vertical, de bas en haut par la tête supérieure 10, de haut en bas par la tête inférieure 12, au moyen du système de positionnement à came 25 et moteur 22. La carte est entraînée dans le sens inverse, et est convoyée dans les demi-carters par les rouleaux d'entraînement dont le sens de rotation est inversé. Elle passe sous les têtes d'impression thermique qui sont en position relevée et vient se recaler exactement sur sa base initiale de départ.

Un nouveau cycle d'impression, strictement identique à celui qui vient d'être décrit précédemment, se déroule pour réaliser le transfert thermique du deuxième colorant recto verso. Un troisième cycle intervient pour le troisième colorant et le cas échéant un quatrième cycle pour le dépôt éventuel d'un film protecteur.

L'impression recto verso étant terminée, la carte est amenée à l'extérieur de la machine par des systèmes connus, non représentés sur les dessins, une nouvelle carte est présentée dans le demi-carter gauche pour poursuivre la série de travaux à exécuter.

## Revendications

1. Machine d'impression biface simultanée pour cartes, notamment en matière plastique, qui comprend :
- un dispositif de guidage et de convoyage d'une carte (33) comprenant des guides (32), (34), des rouleaux (19), (19A), (20), (20A) entraînés par des moteurs (15), (15A) qui sont pilotés par des moyens de détection (16) (16A), (17), (17A), et
- deux machines imprimantes identiques (55, 56) comprenant chacune une tête d'impression thermique (10, 11), un ruban (12, 13) supportant des colorants et substances à déposer sur ladite carte à imprimer (33), qui sont dotées d'un dispositif de pilotage (24, 24A, 23, 23A, 30, 30A) du défilement dudit ruban (12, 13), chaque machine imprimante (55, 56) étant placée de part et d'autre du dispositif de guidage et de convoyage pour que leurs têtes d'impression thermique (10, 11) puissent se déplacer suivant un même axe vertical (18) perpendiculaire à la carte à imprimer,
caractérisée en ce que la machine d'impression biface comprend, en outre,
- un dispositif de déplacement et de positionnement simultanés desdites têtes d'impression thermique (10, 11), et
- un circuit de commande électronique (50) du dispositif de guidage et de convoyage des machines imprimantes (55, 56) et du dispositif de déplacement et positionnement simultanés des têtes d'impression thermique de manière à les rapprocher de la carte pour amener les rubans (12, 13) en contact avec la carte à imprimer (33) lors du passage de cette dernière dans le dispositif de guidage et de convoyage à l'endroit des têtes d'impression thermique et à les écarter de la carte (13) pour déplacer les rubans (12 et 13) et la carte (13).

2. Machine d'impression selon la revendication 1, caractérisée en ce que le dispositif de déplacement et de positionnement des têtes d'impression thermique comprend une came (25) entraînée par un moyen moteur (22) déplaçant symétriquement et en sens inverse deux épaulements (26, 26A) qui sont solidaires respectivement de chaque tête d'impression thermique (10, 11) et se déplacent suivant le même axe vertical (18) guidés par des galets (27, 27A) et dotés d'un ressort (28, 28A) réglable (38, 38A) permettant à chaque tête, après détection d'un jeu déterminé (40, 40A) entre la came et chaque épaulement par un dispositif de détection optique (29, 29A) d'exercer une pression égale et de direction opposée sur chaque face de la carte à imprimer (33).

3. Machine d'impression selon la revendication 1 ou 2, caractérisée en ce que le dispositif de guidage et de convoyage comprend des moyens de guidage (32) de la carte à imprimer (33), des moyens d'entraînement (19, 19A, 15, 20, 20A, 15A) et des moyens de détection (17, 17A, 16, 16A, 17', 17'A) de la position de la carte, ces moyens de détection fournissant des signaux électriques au circuit de commande électronique (50).

4. Machine d'impression selon l'une des revendications précédentes 1 à 3, caractérisée en ce que chaque ruban (12, 13) est enroulé sur deux bobines (36, 37, 36A, 37A) dont l'une, réceptrice, est entraînée par un moteur pas à pas (30, 30A) qui est commandé par un dispositif électronique (23, 23A), ledit dispositif électronique recevant des signaux d'un dispositif de détection (24 et 24A) de la position du ruban et fournissant des signaux d'avance pas à pas du moteur (30, 30A) de manière à faire défiler le ruban (12, 13) à vitesse linéaire constante quel que soit le diamètre du ruban sur la bobine réceptrice.

## Claims

1. A machine for simultaneously printing both sides of cards, particularly made from plastics, comprising :
- a device for guiding and conveying a card (33) having guides (32), (34) and rollers (19), (19A), (20), (20A) driven by motors (15), (15A) which are controlled by detection sensors (16), (16A), (17) (17A) and
- two identical printing machines (55, 56) each having a thermal print head (10, 11) and a ribbon (12, 13) carrying colouring agents and substances to be deposited on said card to be printed (33) and being provided with a control device (24, 24A, 23, 23A, 30, 30A) for feeding said ribbon (12, 13), each printing machine (55, 56) being positioned on either side of the guiding and conveying device so that their thermal print heads (10, 11) can be displaced along a same vertical axis (18) perpendicular to the card to be printed,
characterised in that the double-sided printing machine also has
- a device for simultaneously displacing and positioning said thermal print heads (10, 11) and
- an electronic circuit (50) controlling the guiding and conveying device of the printing machines (55, 56) and the simultaneous displacing and positioning device of the thermal print heads so that they can be brought towards the card in order to place the ribbons (12, 13) in contact with the card to be printed (33) as this latter passes through the guiding and conveying device at the point at which the thermal print heads are located and moved back from the card (33) to displace the ribbons (12 and 13) and the card (33).

2. A printing machine as claimed in claim 1, characterised in that the device for displacing and positioning the thermal print heads has a cam (25) driven by a motor means (22) which displaces symmetrically and in opposite directions two shoulders (26, 26A) joined respectively to each thermal print head (10, 11) and which is displaced along the same vertical axis (18) guided by rollers (27, 27A), being provided with a spring (28, 28A) which can be adjusted (38, 38A) so that after a given clearance (40, 40A) between the cam and each shoulder has been detected by means of an optical detection device (29, 29A) each head will exert a same pressure and in opposite directions on each face of the card to be printed (33).

3. A printing machine as claimed in claim 1 or 2, characterised in that the guiding and conveying device has means for guiding (32) the card to be printed (33), drive means (19, 19A, 15, 20, 20A, 15A) and means for detecting (17, 17A, 16, 16A, 17', 17'A) the position of the card, these detection means supplying electric signals to the electronic control circuit (50).

4. A printing machine as claimed in one of the preceding claims 1 to 3, characterised in that each ribbon (12, 13) is wound on two spools (36, 37, 36A, 37A), one of which, a take-up spool, is driven by a stepper motor (30, 30A) controlled by an electronic device (23, 23A), said electronic device receiving signals from a device for detecting (24 and 24A) the position of the ribbon and supplying forward-feed stepper signals from the motor (30, 30A) so that the ribbon (12, 13) is fed at a constant linear speed regardless of the diameter of the ribbon on the take-up spool.

## Patentansprüche

1. Einrichtung zum simultanen zweiseitigen Drucken auf Karten, insbesondere aus einem Kunststoffmaterial, mit folgenden Merkmalen:
einer Vorrichtung zum Führen und Transportieren einer Karte (33) mit Führungen (32, 34) und Rollen (19, 19A, 20, 20A), die von Motoren (15, 15A) angetrieben werden, welche von Erfassungsmitteln (16, 16A, 17, 17A) gesteuert werden, und
zwei identischen Druckvorrichtungen (55, 56), die jeweils einen thermischen Druckkopf (10, 11) und ein Band (12, 13) aufweisen, welches Farbmittel und Substanzen trägt, die auf die zu bedruckende Karte (33) aufgebracht werden sollen, die mit einer Vorrichtung zum Steuern (24, 24A, 23, 23A, 30, 30A) der Bewegung des Bandes (12, 13) versehen sind, wobei jede Druckvorrichtung (55, 56) zu beiden Seiten der Führungs- und Transportvorrichtung angeordnet ist, damit die thermischen Druckköpfe (10, 11) sich entlang ein- und derselben vertikalen Achse (18) senkrecht zu der zu bedruckenden Karte bewegen können, dadurch **gekennzeichnet**, daß die Einrichtung zum zweiseitigen Drucken folgende weitere Merkmale aufweist:
eine Vorrichtung zum simultanen Verschieben und Positionieren der thermischen Druckköpfe (10, 11) und
eine elektronische Steuerschaltung (50) für die Führungs- und Transportvorrichtung der Druckvorrichtungen (55, 56) und die Vorrichtung zum simultanen Verschieben und Positionieren der thermischen Druckköpfe, um diese an die Karte anzunähern, um die Bänder (12, 13) in Kontakt mit der zu bedruckenden Karte (33) zu bringen, wenn diese in der Führungs- und Transportvorrichtung an den thermischen Druckköpfen vorbeigeht, und sie von der Karte (13) zu entfernen, um die Bänder (12 und 13) und die Karte (13) zu verschieben.

2. Druckeinrichtung nach Anspruch 1, dadurch **gekennzeichnet**, daß die Vorrichtung zum Verschieben und Positionieren der thermischen Druckköpfe einen Nocken (25) aufweist, der von einer Antriebsvorrichtung (22) angetrieben wird und zwei Vorsprünge (26, 26A) symmetrisch und in entgegengesetzter Richtung verschiebt, wobei die Vorsprünge einstückig mit den jeweiligen thermischen Druckköpfen (10, 11) ausgebildet sind und sich entlang derselben vertikalen Achse (18) bewegen, von Scheiben (27, 27A) geführt sind und eine einstellbare (38, 38A) Feder (28, 28A) aufweisen, mit deren Hilfe jeder Kopf nach der Erfassung eines vorgegebenen Spiels (40, 40A) zwischen dem Nocken und jedem Vorsprung mit einer optischen Erfassungsvorrichtung (29, 29A) auf jede Seite der zu bedruckenden Karte (33) einen gleich großen und in entgegengesetzter Richtung wirkenden Druck ausübt.

3. Druckeinrichtung nach Anspruch 1 oder 2, dadurch **gekennzeichnet**, daß die Vorrichtung zum Führen und Transportieren Führungsmittel (32) für die zu bedruckende Karte (33), Transportmittel (19, 19A, 15, 20, 20A, 15A) und Erfassungsmittel (17, 17A, 16, 16A, 17', 17'A) für die Position der Karte aufweist, wobei diese Erfassungsmittel elektrische Signale zu der elektronischen Steuerschaltung (50) liefern.

4. Druckeinrichtung nach einem der vorangehenden Ansprüche 1 bis 3, dadurch **gekennzeichnet**, daß jedes Band (12, 13) auf zwei Spulen (36, 37, 36A, 37A) gewickelt ist, von denen eine Aufnahmespule von einem Schrittmotor (30, 30A) angetrieben wird, der über eine elektronische Einrichtung (23, 23A) angesteuert wird, wobei die elektronische Einrichtung Signale von einer Erfassungsvorrichtung (24 und 24A) für die Position des Bandes empfängt und Signale zur Steuerung des Schrittmotors (30, 30A) liefert, so daß sich das Band (12, 13) unabhängig von dem Durchmesser des Bandes auf der Aufnahmespule mit einer linearen konstanten Geschwindigkeit bewegt.
